(19) Europäisches Patentamt
European Patent Office
Office européen des brevets

(11) EP 0 789 724 B1

(12) # EUROPÄISCHE PATENTSCHRIFT

(45) Veröffentlichungstag und Bekanntmachung des Hinweises auf die Patenterteilung:
**31.03.1999 Patentblatt 1999/13**

(21) Anmeldenummer: **95937840.7**

(22) Anmeldetag: **25.10.1995**

(51) Int Cl.[6]: **C08K 5/07**, C09D 151/00, C09J 151/00

(86) Internationale Anmeldenummer:
**PCT/EP95/04180**

(87) Internationale Veröffentlichungsnummer:
**WO 96/14355 (17.05.1996 Gazette 1996/22)**

(54) **WÄSSRIGE POLYMERISATDISPERSION**
AQUEOUS POLYMER DISPERSION
DISPERSION AQUEUSE DE POLYMERE

(84) Benannte Vertragsstaaten:
**AT BE CH DE DK ES FR GB IT LI NL SE**

(30) Priorität: **04.11.1994 DE 4439457**

(43) Veröffentlichungstag der Anmeldung:
**20.08.1997 Patentblatt 1997/34**

(73) Patentinhaber: **BASF AKTIENGESELLSCHAFT**
**67056 Ludwigshafen (DE)**

(72) Erfinder:
- **BAUMSTARK, Roland**
**D-67434 Neustadt (DE)**
- **PORTUGALL, Michael**
**D-67157 Wachenheim (DE)**

(56) Entgegenhaltungen:
**EP-A- 0 522 789**
**WO-A-95/09896**
**DE-U- 9 301 444**

EP 0 789 724 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Vorliegende Erfindung betrifft eine wäßrige Polymerisatdispersion enthaltend

A) wenigstens ein dispergiertes Polymerisat A, dadurch erhältlich, daß man eine Zusammensetzung 1 von wenigstens eine ethylenisch ungesättigte Gruppe aufweisenden Verbindungen (Monomeren) nach der Methode der radikalischen wäßrigen Emulsionspolymerisation bis zu einem Umsatz von wenigstens 90 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation mit der Maßgabe polymerisiert (Polymerisationsstufe 2), daß

a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

c) der Differenzbetrag zwischen $Tg^1$ und $Tg^2$ wenigstens 20°C beträgt,

d) die Menge derjenigen Zusammensetzung i, der der tiefere Grenzwert $Tg^i$ zuzuordnen ist, bezogen auf die Gesamtmenge der Zusammensetzungen 1 und 2, 40 bis 90 Gew.-% beträgt,

e) zusätzlich zu den Monomeren der Zusammensetzungen 1 und 2 wenigstens ein von diesen Monomeren verschiedenes, wenigstens eine ethylenisch ungesättigte Gruppe und wenigstens eine Gruppe der allgemeinen Formel I

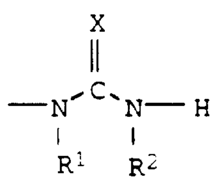 (I),

in der die Variablen bedeuten:

X: 0 oder S und

$R^1$, $R^2$: jedes von beiden Wasserstoff oder eine $C_1$- bis $C_5$-Alkylgruppe, oder beide zusammen eine überbrükkende $C_2$- bis $C_4$-Alkylengruppe, die bis zu zweifach mit einer $C_1$- bis $C_4$-Alkoxygruppe und/oder Hydroxylgruppe substituiert sein kann,

aufweisendes Haftmonomeres in einer Menge von 0,1 bis 30 Gew.-%, häufig 0,5 bis 10 Gew.-%, vorzugsweise 1 bis 5 Gew.-% und ganz besonders bevorzugt 1 bis 3 Gew.-%, bezogen auf die Gesamtmenge der zu polymerisierenden Monomeren, einpolymerisiert wird,

B) wenigstens eine, wenigstens zwei ungeschützte und/oder reversibel geschützte Aldehydgruppen aufweisende, chemische Verbindung B, mit der Maßgabe, daß das molare Verhältnis V der in der wäßrigen Polymerisatdispersion insgesamt enthaltenen Gruppierungen I zu der in der wäßrigen Polymerisatdispersion in Form von Verbindungen B insgesamt enthaltenen molaren Menge an ungeschützten und/oder reversibel geschützten Aldehydgruppen 0,1 bis 10 zu 1 beträgt, und

C) kein Carbonsäurehydrazid.

Ferner betrifft vorliegende Erfindung Verfahren zur Herstellung erfindungsgemäßer wäßriger Polymerisatdispersionen sowie deren Verwendung zum Beschichten, Kleben, Dichten oder Imprägnieren, wobei die Verwendung als Bindemittel für Anstrichmittel und insbesondere Lasuren bevorzugt ist.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm.

Ebenso wie Polymerisatlösungen beim Verdampfen des Lösungsmittels weisen wäßrige Polymerisatdispersionen beim Verdampfen des wäßrigen Dispergiermediums die Fähigkeit auf, transparente Polymerisatfilme zu bilden, weshalb wäßrige Polymerisatdispersionen in vielfacher Weise als Bindemittel, z.B. für Anstrichfarben oder Massen zum Beschichten von Leder, Anwendung finden.

Ob eine wäßrige Polymerisatdispersion nach Verdampfen des Wassers einen zusammenhängenden transparenten Film bildet oder eine spröde, trübe pulverisierbare Schicht entsteht, ist jedoch im Unterschied zur Polymerisatlösung abhängig von der Art des dispergierten Polymerisats und von der Temperatur, bei der die Filmbildung erfolgt. Die tiefste Temperatur, bei der gerade noch ein transparenter, nicht rissiger Film gebildet wird, soll nachfolgend als Mindest-Filmbilde-Temperatur (MFT) der betreffenden wäßrigen Polymerisatdispersion bezeichnet werden. Unterhalb der MFT erhält man keine Filmbildung (vgl. Ullmanns Encyklopädie der technischen Chemie, Bd. 19, 4. Auflage, Verlag Chemie, Weinheim (1980), S. 17).

Es ist allgemein bekannt, daß wäßrige Polymerisatdispersionen von Polymerisaten, die im wesentlichen nur solche Monomeren einpolymerisiert enthalten, deren Homopolymerisate tiefliegende Glasübergangstemperaturen Tg (Tg meint in dieser Schrift den Grenzwert der Glasübergangstemperatur, dem diese gemäß G. Kanig, Kolloid-Zeitschrift & Zeitschrift für Polymere, Bd. 190, S. 1, Gleichung 1, mit zunehmendem Molekulargewicht zustrebt, ermittelt nach dem DSC-Verfahren (Differential Scanning Calorimetry, 20°C/ min, midpoint); die Tg-Werte für die Homopolymerisate der meisten Monomeren sind bekannt und z.B. in Ullmann's Encyclopedia of Industrial Chemistry, VCH Weinheim, 1992, fifth edition, Vol. A21, S. 169 aufgeführt; weitere Quellen für Glasübergangstemperaturen von Homopolymerisaten bilden z.B. J. Brandrup, E.H. Immergut, Polymer Handbook 1$^{St}$ Ed. J. Wiley, New York 1966, 2$^{nd}$ Ed. J. Wiley, New York 1975, und 3$^{rd}$ Ed. J. Wiley, New York, 1989) aufweisen (sogenannte weiche Monomeren), in der Regel auch bei entsprechend tiefen Temperaturen noch Polymerisatfilme zu bilden vermögen. Nachteilig an den dabei resultierenden Verfilmungen ist jedoch, daß sie für viele Anwendungsgebiete zu weich und zu klebrig sind. Dies ist insofern von Nachteil, als solche Verfilmungen z.B. durch Anhaften von Staub leicht verschmutzen. Insbesondere verfügen auf der Basis solcher Verfilmungen erzeugte Beschichtungen normalerweise auch eine tiefliegende Blocktemperatur. Letzteres ist diejenige Temperatur bei der solche Beschichtungen miteinander verkleben, wenn sie unter einem vorgegebenen Anpreßdruck für einige Zeit miteinander in Kontakt gebracht werden. Oberhalb der Blocktemperatur haften die Beschichtungen aneinander und lassen sich nicht mehr voneinander trennen, ohne daß die Beschichtungen dabei verletzt werden. Ein Verblocken kann auch dann noch auftreten, wenn die Beschichtungen keine Anfaßklebrigkeit aufweisen. Die Blocktemperatur ist insbesondere dann von Bedeutung, wenn mit Beschichtungen auf der Basis wäßriger Polymerisatdispersionen versehene Substrate aufeinander gestapelt oder frisch gestrichene Fenster geschlossen werden sollen. Bei einem unterhalb der Blocktemperatur erfolgenden in Kontakt bringen der Beschichtungen lassen sich diese im wesentlichen ohne Kraftaufwand und unversehrt wieder voneinander trennen.

Es ist auch allgemein bekannt, daß wäßrige Polymerisatdispersionen von Polymerisaten, die im wesentlichen nur harte Monomere (solche Monomere, deren Homopolymerisate eine erhöhte Glasübergangstemperatur Tg aufweisen) einpolymerisiert enthalten, in der Regel eine erhöhte Blocktemperatur aufweisen. Nachteilig an diesen wäßrigen Polymerisatdispersionen ist jedoch, daß sie auch einer erhöhten Temperatur zum Verfilmen bedürfen.

Durch Copolymerisation von harten und weichen Monomeren oder durch Abmischen von wäßrigen Polymerisatdispersionen harter Polymerisate mit wäßrigen Polymerisatdispersionen weicher Polymerisate oder durch Zusatz weichmachender Mittel lassen sich MFT und Blocktemperatur (BT) zwar in bestimmtem Ausmaß der gewünschten Anwendung anpassen. Nachteilig an diesen Anpassungsmaßnahmen ist jedoch, daß sie in der Regel MFT und BT im selben Ausmaß verändern. D.h. die BT wird durch sie üblicherweise in vergleichbarem Ausmaß erhöht bzw. erniedrigt wie die MFT.

Anwendungstechnisch erwünscht sind jedoch solche Anpassungsmaßnahmen, die die Temperaturdifferenz zwischen MFT und BT zu vergrößern vermögen.

Aus der EP-A 184 091, der EP-A 376 096, der DE-AS 12 20 613, der US-A 3-454 516, der EP-A 609 756 und der EP-A 379 892 ist bekannt, daß vorgenannte Zielsetzung im wesentlichen dadurch realisiert werden kann, daß man die radikalische wäßrige Emulsionspolymerisation räumlich vereint in zwei zeitlich aufeinanderfolgenden Stufen durchführt, wobei eine der beiden Stufen hauptsächlich weiche Monomere und die andere Stufe hauptsächlich harte Monomere umfaßt. In überraschender Weise spielt dabei die Abfolge der beiden Stufen, d.h, ob zunächst die harte Stufe und dann die weiche Stufe oder umgekehrt polymerisiert wird, eine eher untergeordnete Rolle. So lehrt die EP-A 379 892 beispielsweise die Abfolge hart/ weich, wohingegen die EP-A 184 091 die Abfolge weich/hart lehrt. Sowohl die EP-A 184 091 als auch die EP-A 379 892 lehren darüber hinaus, ein stickstoffhaltiges Haftmonomer einzupolymerisieren, um die Haftung der Verfilmungen solcher wäßriger Polymerisatdispersionen auf zahlreichen Materialien wie

Holz, Metall, Mineralien, Papier, Textilien und Kunststoff, insbesondere aber auf alten Anstrichen auf der Basis trocknender Öle und/oder Alkydharze, zu erhöhen und die Empfindlichkeit der Haftung gegenüber der Einwirkung von Feuchtigkeit und Nässe zu mindern (erhöhte Naßhaftung).

Nachteilig an diesen wäßrigen Polymerisatdispersionen des Standes der Technik ist jedoch, daß sie zwar bezüglich der Balance von BT und MFT sowie Naßhaftung im wesentlichen zu befriedigen vermögen, hinsichtlich ihrer Weißanlaufbeständigkeit bei Einwirkung von wäßriger Feuchtigkeit jedoch kein zufriedenstellendes Verhalten aufweisen.

Aufgabe der vorliegenden Erfindung war es daher, wäßrige Polymerisatdispersionen zur Verfügung zu stellen, die sowohl bezüglich der Balance von BT und MFT, als auch im Hinblick auf Naßhaftung im vollen Umfang zu befriedigen vermögen, gleichzeitig jedoch eine erhöhte Weißanlaufbeständigkeit aufweisen. Demgemäß wurden die eingangs definierten wäßrigen Polymerisatdispersionen gefunden.

Dabei konnte von dem weiteren nachfolgenden Stand der Technik ausgegangen werden. Aus der EP-A 609 793 sind wäßrige Polymerisatdispersionen bekannt, die ein Emulsionspolyermisat mit polymerisierten Einheiten eines ethylenisch ungesättigten, radikalisch polymerisierbaren Monomeren mit einer seitenständigen Alkylenharnstoffgruppe sowie eine zwei gegebenenfalls geschützte Aldehydgruppen aufweisende Vernetzungskomponente enthalten. Als vorteilhafte Eigenschaften solcher wäßriger Polymerisatdispersionen stellt die EP-A 609 793 heraus, daß sie einerseits lagerstabil sind und andererseits im Rahmen ihre Verfilmung zu vernetzten Filmen (Nachvernetzung) führen, die eine reduzierte Empfindlichkeit gegen die Einwirkung organischer Lösungsmittel aufweisen. Von der Bemerkung, daß der vorgenannte Vernetzungstyp auch auf mehrstufige Emulsionspolymerisate angewendet werden kann, abgesehen, umfaßt die EP-A 609 703 lediglich einstufige Emulsionspolymerisate.

In der EP-A 184 091 werden in zwei zeitlich aufeinanderfolgenden Polymerisationsstufen unterschiedlicher Monomerenzusammensetzung hergestellte wäßrige Polymerisatdispersionen als Bindemittel für blockfeste Anstrichfarben empfohlen, deren dispergierte Polymerisate neben ethylenisch ungesättigten Aldehyden auch Gruppierungen (I) aufweisende ethylenisch ungesättigte Monomere einpolymerisiert enthalten können. Nachteilig an der Lehre der EP-A 184 091 ist jedoch, daß sie zwar die Copolymerisation ethylenisch ungesättigter Aldehyde zum Zwecke der Erhöhung der inneren Festigkeit des Anstrichs empfiehlt, jedoch davon ausgeht, daß eine solche Erhöhung der inneren Festigkeit nur dann eintritt, wenn, bezogen auf die Menge des einpolymerisierten ethylenisch ungesättigten Aldehyds, in die Anstrichfarbe eine bestimmte Menge Dicarbonsäuredihydrazid eingerührt wird, die die Aldehydgruppen chemisch bindet.

Aus der EP-A 488 605, die die Copolymerisation von Gruppierungen (I) aufweisenden ethylenisch ungesättigten Monomeren als Formaldehydfänger empfiehlt, war bekannt, daß Gruppierungen (I) mit Aldehydgruppen chemische Bindungen einzugehen vermögen.

In der US-A 3 455 861 wird empfohlen, in wäßrige Polymerisatdispersionen, die ethylenisch ungesättigte Aldehyde einpolymerisiert enthalten, zum Zwecke der Erhöhung der inneren Festigkeit ihrer Verfilmungen Harnstoff-Formaldehyd-Harze, d.h. Harze die Gruppen (I) aufweisen, einzurühren.

Die DE-A 4 334 178 betrifft lediglich wäßrige Polymerisatdispersionen von einstufig erzeugten Dispersionspolymerisaten, die die Kombination Polyaldehyd/einpolymerisierte Gruppe (I) aufweisen.

Prinzipiell läßt sich die erfindungsgemäße Verfahrensweise auf alle im Rahmen der Würdigung des Standes der Technik aufgeführten hart/weich bzw. weich/hart Abfolgen in vorteilhafter Weise anwenden. Das sind insbesondere diejenigen der EP-A 609 756, der EP-A 379 892, der EP-A 184 091, der EP-A 376 096, der DE-AS 12 20 613 und der US-A 3 454 516.

Vorteilhaft sind jedoch solche erfindungsgemäßen wäßrigen Polymerisatdispersionen, bei denen die Menge derjenigen Monomerenzusammensetzung i, der der tiefere Grenzwert $Tg^1$ zuzuordnen ist, bezogen auf die Gesamtmenge der Zusammensetzungen 1 und 2, 60 bis 80, vorzugsweise 70 bis 80 Gew.-% beträgt. Der Betrag der Differenz zwischen $Tg^1$ und $Tg^2$ kann wenigstens 30, 40, 50, 60, 70, 80, 90 aber auch 100, 120 sowie 150°C oder mehr, in der Regel also 20 bis 150°C betragen.

In anwendungstechnisch zweckmäßiger Weise beträgt der Differenzbetrag zwischen $Tg^1$ und $Tg^2$ 60 bis 120°C oder 40 bis 80°C.

Ferner ist es günstig, wenn der tiefere Grenzwert $Tg^i$ im Bereich -60 bis 35°C, vorzugsweise -30 bis +35°C und ganz besonders bevorzugt im Bereich -20 bis +20°C liegt.

In entsprechender Weise erweist es sich als günstig, wenn der höhergelegene der beiden Grenzwerte $Tg^i$ im Bereich > 50 bis 130°C, vorzugsweise 60 bis 120°C und ganz besonders bevorzugt im Bereich 95 bis 115°C liegt.

Bei vorgegebenem $Tg^i$ für die Monomerenzusammensetzung i läßt sich die Monomerenzusammensetzung i in einfacher Weise mittels der Gleichung nach Fox zusammenstellen. Nach Fox (T.G. Fox, Bull. Am. Phys. Soc. (Ser. II) 1, 123 (1956) und Ullmanns Encyklopädie der technischen Chemie, Verlag Chemie, Weinheim, 1980, Bd. 19, 4. Auflage, S. 18) gilt für die Glasübergangstemperatur von statistischen Mischpolymerisaten in guter Näherung

$$\frac{1}{Tg} = \frac{X^1}{Tg^1} + \frac{X^2}{Tg^2} + \cdots\cdots \frac{X^n}{Tg^n},$$

wobei $X^1$, $X^2$, ..........., $X^n$ die Massenbrüche der Monomeren 1, 2, ....... , n und $Tg^1$, $Tg^2$ ......., $Tg^n$ die Glasübergangstemperaturen der jeweils nur aus einem der Monomeren 1, 2 ........., oder n aufgebauten Polymerisate in Grad Kelvin bedeuten.

Experimentell läßt sich eine statistische Copolymerisation einer Monomerenzusammensetzung i im wesentlichen dadurch realisieren, daß man ein ihr entsprechendes Monomerengemisch nach dem Zulaufverfahren der Methode der radikalischen wäßrigen Emulsionspolymerisation polymerisiert. D.h. man emulgiert das Monomerengemisch in wäßriger Phase vor und und läßt es nach Maßgabe des Verbrauchs dem Polymerisationsgefäß unter Zusatz von Initiatoren so zulaufen, daß der Polymerisationsumsatz der bereits im Polymerisationsgefäß befindlichen Monomeren $\geq$ 99 Gew.-% beträgt. Als Initiatoren eignen sich vorzugsweise Natriumperoxodisulfat und die Polymerisationstemperatur liegt normalerweise bei 60 bis 90°C. Der Polymerisationsdruck kann je nach Monomeren $\geq$ 1 atm betragen. Als Dispergiermittel können die in dieser Schrift zur Herstellung der erfindungsgemäßen wäßrigen Polymerisatdispersionen empfohlenen Substanzen angewendet werden. Das Molekulargewicht läßt sich in an sich bekannter Weise durch Mitverwendung von das Molekulargewicht regelnden Substanzen (z.B. Mercaptanen) und/oder die verwendete Initiatormengen einstellen. In Abwesenheit von das Molekulargewicht regelnden Substanzen und Verwendung von 0,1 bis 2 Gew.-%, bezogen auf die Monomerenmenge, an Polymerisationsinitiator, läßt sich eine wäßrige Polymerisatdispersion erhalten, deren Glasübergangstemperatur dem Grenz-Tg entspricht.

Die erfindungsgemäßen wäßrigen Polymerisatdispersionen umfassen sowohl diejenigen, bei denen die Polymerisationsstufe 1 diejenige Monomerenzusammensetzung betrifft, der der tiefere Grenzwert $Tg^i$ zuzuordnen ist, d. h. die die Stufenabfolge weich/hart aufweisen, als auch jene, bei denen die Polymerisationsstufe 1 diejenige Monomerenzusammensetzung betrifft, der der höhere Grenzwert $Tg^1$ zuzuordnen ist, d.h. die die Stufenabfolge hart/weich aufweisen, wobei erstere (weich/hart) bevorzugt werden.

Mit Vorteil enthält das Polymerisat A Gruppen I aufweisende Monomere in solchen Mengen einpolymerisiert, daß ihr Gewichtsanteil, bezogen auf die Gesamtmenge der in A einpolymerisierten Monomeren, 0,5 bis 10, vorzugsweise 1 bis 5 Gew.-% und ganz besonders bevorzugt 1 bis 3 Gew.-% beträgt. Das molare Verhältnis V wird zweckmäßig so gewählt, daß es 1:0,1 bis 2, vorzugsweise 1:0,1 bis 1 und ganz besonders bevorzugt 1:0,5 bis 1 beträgt.

Bevorzugte Gruppen I sind:

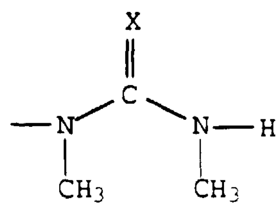

sowie

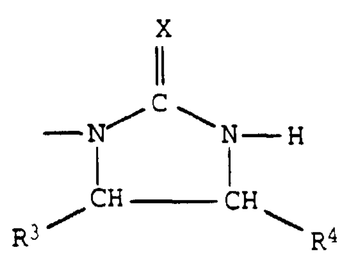

wobei jeder der beiden Substituenten $R^3$, $R^4$ Wasserstoff, eine Hydroxylgruppe oder eine $C_1$- bis $C_4$-Alkoxygruppe sein kann.

Unter den letzteren sind wiederum jene bevorzugt, in denen $R^3$ und $R^4$ beide gleichzeitig Wasserstoff oder $R^3$ Wasserstoff und $R^4$ eine $C_1$- bis $C_4$-Alkoxygruppe sind. X ist ganz allgemein vorzugsweise Sauerstoff.

Geeignete Gruppen I aufweisende copolymerisierbare Monomere sind solche der allgemeinen Formel II

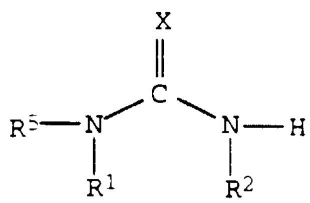 (II),

in der $R^5$ für einen Rest steht, der wenigstens eine ethylenisch ungesättigte C=C Bindung aufweist.

Beispielhaft seien als Reste $R^5$ genannt:

$CH_2$=CH-, $CH_2$=CH-$CH_2$-, 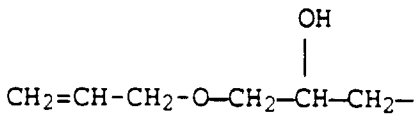 ,

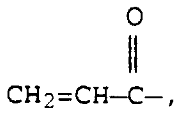, 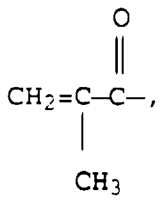, 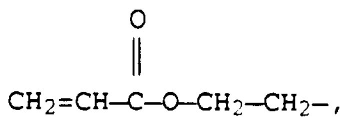, 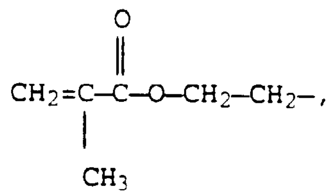,

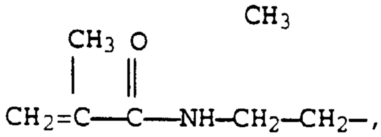, 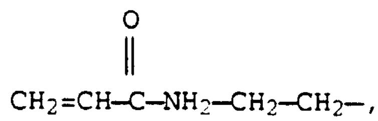,

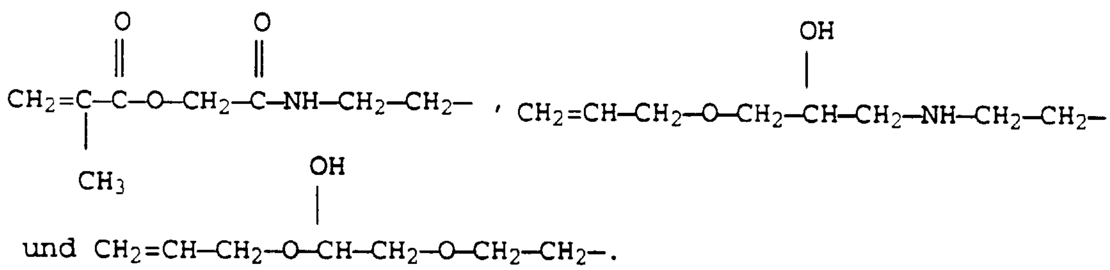
, und .

Als günstige copolymerisierbare Monomere II seien genannt: N-Vinylethylenharnstoff, N-Methacryloxyacetoxyethylethylenharnstoff, N-di (3-allyloxy-2-hydroxypropyl)-aminoethylethylenharnstoff, N-(Acrylamidoethyl)ethylenharnstoff, N-(2-acryloyl-oxyethyl)-ethylenharnstoff, N-Methacrylaminomethyl-harnstoff, Allylalkylethylenharnstoff, N-(2-Methacryloxyacetamidoethyl)-N,N'-ethylenharnstoff, sowie insbesondere N-(2-Methacryloyl-oxyethyl)-ethylenharnstoff (auch [l-(2-methacryloyl-oxyethyl)imidazolin-2-on] genannt), N-(Methacrylamidoethyl)ethylenharnstoff, N-(3-allyloxy-2-hydroxypropyl)aminoethylethylenharnstoff (Sipomer® WAM der Fa. Alcolac) und N-2-(Allylcarbamato)-aminoethylimidazolidinon (WAM IV der Fa. Air Products Chemicals).

Darüber hinaus eignen sich prinzipiell alle in den eingangs als Stand der Technik zitierten Patentschriften aufgeführten Gruppen I aufweisenden Monomeren. Entsprechende Monomere sind auch aus US-A 27 27 016, US-A 2 871 223, US-A 2 881 155, EP-B 421 185, US-A 2 980 652, US-A-3 194 792, US-A 4 104 220, US-A 4 111 877 und US-A 4 559 417 bekannt. Weitere geeignete Wirkmonomere II werden in einem Übersichtsartikel von R.W. Kreis und A.M. Sherman, Developments in "Ureido Functional Monomer for Promoting Wet Adhesion in Latex Paints, Water-Borne and Higher-Solids Coating Symposium vom 03.-05.02.1988, New Orleans, Louisiana", genannt.

Zum Aufbau der Monomerenzusammensetzungen 1 und 2 kommen insbesondere monoethylenisch ungesättigte radikalisch polymerisierbare Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinylpivalat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure

und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, n-butyl, -iso-butyl, tert.-butyl und -2-ethylhexylester, Maleinsäuredimethylester oder Maleinsäure-n-butylester, Nitrile α,β-monoethylenisch ungesättigter Carbonsäuren wie Acrylnitril und Methacrylnitril sowie $C_{4-8}$-konjugierte Diene wie 1,3-Butadien und Isopren in Betracht. Von Bedeutung sind auch im Handel befindliche Monomere VEOVA® 9-11 (VEOVA X ist ein Handelsname der Firma Shell und steht für Vinylester (von Carbonsäuren, die auch als Versatic® X-Säuren bezeichnet werden) der allgemeinen Formel

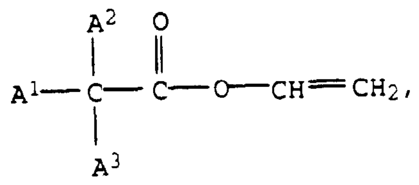

wobei $A^1$, $A^2$ und $A^3$ für Alkylreste stehen, deren Gesamtzahl an Kohlenstoffatomen ($A^1$+$A^2$+$A^3$) gleich X abzüglich 2 ist.

Aus den vorgenannten Monomeren rekrutiert sich in der Regel der Hauptanteil der Monomerenzusammensetzungen 1 und 2, der, bezogen auf die jeweilige Monomerenzusammensetzung, einen Anteil von mehr als 50 Gew.-% auf sich vereint. Monomere, die für sich polymerisiert üblicherweise Homopolymerisate ergeben, die eine erhöhte Wasserlöslichkeit aufweisen, sind in beiden Monomerenzusammensetzungen im Normalfall lediglich in modifizierenden Mengen enthalten. Bezogen auf die Gesamtmenge der jeweiligen Monomerenzusammensetzung sind das normalerweise weniger als 50 Gew.-%, in der Regel weniger als 20 Gew.-%, vorzugsweise 0,1 bis 10 Gew.-%, häufig auch 0,1 bis 5 Gew.-%. Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure, Acrylamidopropansulfonsäure und wasserlösliche Salze der vorgenannten Säuren.

Vorzugsweise enthält sowohl die Monomerenzusammensetzung 1 als auch die Monomerenzusammensetzung 2 0,1 bis 5 Gew.-%, bezogen auf die jeweilige Monomerenzusammensetzung i, an den vorgenannten modifizierenden Monomeren, deren Homopolymerisate eine erhöhte Wasserlöslichkeit aufweisen.

Neben den bereits aufgeführten Monomeren können die Monomerenzusammensetzungen 1 und 2 in untergeordneten Mengen, in der Regel 0,01 bis 5 Gew.-%, bezogen auf die jeweilige Monomerenzusammensetzung i, an solchen Monomeren umfassen, die innerhalb der individuellen dispergierten Polymerisatpartikel eine Vernetzung der Polymerketten bewirken. Besonders geeignet sind diesbezüglich zwei oder mehr nicht konjugierte ethylenisch ungesättigte Gruppen aufweisende Monomere wie z.B. die Di-Ester zweiwertiger Alkohole mit α,β-monoethylenisch ungesättigten Monocarbonsäuren, unter denen wiederum die Acryl- und Methacrylsäureester vorzugsweise eingesetzt werden. Beispielhaft aufgeführt seien Alkylenglykol) diacrylate- und dimethyacrylate wie Ethylenglykoldiacrylat, 1,3-Butylenglykoldiacrylat, 1,4-Butylenglykoldiacrylat sowie Propylenglykoldiacrylat. Ferner eignen sich Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. Selbstverständlich können sowohl-die Monomerenzusammensetzung 1 und die Monomerenzusammensetzung 2 gleichzeitig solche vorvernetzenden Monomeren umfassen. Manchmal ist es aber auch günstig, wenn nur eine der beiden Monomerenzusammensetzungen solche Vorvernetzer enthält. Häufig sind sie nur Bestandteil der ersten oder der zweiten Polymerisiationsstufe. Zweckmäßig ist insbesondere ihre ausschließliche Verwendung in der harten Polymerisationsstufe. Sie können aber auch nur in der weichen Polymerisationsstufe befindlich angewendet werden.

Vielfach ist es günstig, wenn wenigstens eine der beiden Monomerenzusammensetzungen 1, 2, oder auch beide, in untergeordneten Mengen, üblicherweise 0,5 bis 5 Gew.-%, bezogen auf die jeweilige Monomerenzusammensetzung i, solche Monomeren umfassen, die erst während der Filmbildung eine Vernetzung bedingen (Nachvernetzer).

Als solche Monomeren kommen insbesondere jene in Betracht, die eine Epoxy-, Hydroxy- oder N-Methylolgruppe aufweisen wie z.B. Glycidylacrylat, N-Methylolacrylamid und -methacrylamid und Monoester aus zweiwertigen Alkoholen und 3 bis 6 C-Atome aufweisenden α,β-monoethylenisch ungesättigten Carbonsäuren wie Hydroxyethyl-, n-Hydroxypropyl- oder n-Hydroxybutylacrylat und -methacrylat. Des weiteren eignen sich zur Nachvernetzung solche Polymerisatbausteine, die hydrolysierbare Si-organische Bindungen aufweisen. Beispielhaft genannt seien die copolymerisierbaren Monomeren Methacryloxypropyltrimethoxysilan und Vinyltrimethoxysilan. Weitere geeignete Polymerbausteine entsprechender Art finden sich in der DE-A 4 341 260.

Umfassen die erfindungsgemäßen wäßrigen Polymerisatdispersionen Vorvernetzung- und/oder Nachvernetzung bewirkende Monomere, so sind mit den den Monomerenzusammensetzungen 1 und 2 definitionsgemäß zuzuordnenden Glasübergangstemperaturen $Tg^1$ und $Tg^2$, die unter Ausschluß dieser lediglich in untergeordneten Mengen

enthaltenen Vernetzermonomeren zu ermittelnden Glasübergangstempraturen gemeint. In der Regel wirkt sich die Vor- und/oder Nachvernetzung vorteilhaft auf die Anfangs- (unmittelbar nach Verfilmung) und Endblocktemperatur (nach mehreren Tagen) aus.

Vorzugsweise rekrutieren sich die Monomerenzusammensetzungen 1 und 2 in der vorstehend beschriebenen Weise ausschließlich aus den nachfolgenden Monomeren:
n-Butylacrylat, 2-Ethylhexylacrylat, Ethylacrylat, Methylmethacrylat, n-Butyl-methacrylat, Styrol, Acrylnitril, Acrylsäure, Methacrylsäure, Acrylamid, Methacrylamid, Hydroxyethylacrylat, Hydroxyethylmethacrylat, Acrylamidopropansulfonsäure sowie Vinylsulfonsäure und deren Alkalimetallsalze.

Besonders bevorzugt rekrutieren sich die Monomerenzusammensetzungen 1 und 2 in der vorstehend beschriebenen Weise ausschließlich aus den nachfolgenden Monomeren:
n-Butylacrylat, 2-Ethylhexylacrylat, Methylmethacrylat, n-Butylmethacrylat, Acrylsäure, Methacrylsäure, Acrylamid und Methacrylamid.

Insgesamt erweist es sich als günstig, wenn einerseits die Monomerenzusammensetzung i mit dem tieferen $Tg^1$-Wert, bezogen auf die Monomerenzusammensetzung i, 10 bis 40 Gew.-% an solchen Monomeren umfaßt, deren Homopolymerisate Tg-Werte oberhalb des tieferen $Tg^i$ aufweisen und andererseits die Monomerenzusammensetzung i mit dem höheren $Tg^i$-Wert in gleicher Weise bezogen gleichzeitig 0 bis 40, vorzugsweise 0 bis 25 Gew.-% an solchen Monomeren umfaßt, deren Homopolymerisate Tg-Werte unterhalb des höheren $Tg^i$ aufweisen. Generell sind solche erfindungsgemäßen wäßrigen Polymerisatdispersionen von Vorteil, deren MFT ohne Zusatz von Filmbildehilfsmittel ≤ 30°C, vorzugsweise ≤ 10°C, beträgt.

Die wenigstens eine Gruppierung I aufweisenden Monomeren können in ihrer Gesamtmenge entweder ausschließlich in der Polymerisationsstufe 1 oder ausschließlich in der Polymerisationsstufe 2 enthalten sein, wobei jede dieser beiden Polymerisationsstufen die harte oder die weiche Polymerisationsstufe sein kann. Selbstverständlich können die wenigstens eine Gruppierung I aufweisenden Monomeren auch auf beide Polymersiationsstufen verteilt sein.

Im Sinne von hauptsächlich eine erhöhte Naßhaftung aufweisenden wäßrigen Polymerisatdispersionen umfaßt vorzugsweise die Polymerisationsstufe 2 die Gesamtmenge der wenigstens eine Gruppierung I aufweisenden Monomeren. Vorzugsweise ist in diesem Fall die Polymerisationsstufe 2 die weiche Stufe.

Wird bei voll befriedigender Naßhaftung gleichzeitig eine erhöhte Reißdehnung sowie ein erhöhter Glanz der erfindungsgemäßen wäßrigen Polymerisatdispersion angestrebt, werden 20 bis 100 mol-%, bevorzugt 30 bis 100 mol-%, oder 40 bis 100 mol-% beziehungsweise 50 bis 100 mol-% der definitionsgemäß einzupolymerisierenden, wenigstens eine Gruppierung I aufweisenden, Monomeren, in der Polmyerisationsstufe 1 einpolymerisiert, die dann vorzugsweise die weiche Polymerisationsstufe ist.

Der Bestandteil B der erfindungsgemäßen wäßrigen Polymerisatzubereitungen kann vom Bestandteil A sowohl verschieden als auch gleich dem Bestandteil A sein. Im letzteren Fall muß das Polymerisat A die entsprechende Menge an ethylenisch ungesättigten Aldehyden einpolymerisiert enthalten. Beispielhaft genannt seien Acrolein, Methacrolein, Formylstyrol, Crotonaldehyd, Zimtaldehyd, Citral sowie (Meth)acrylsäurealkylester mit ein oder zwei Aldehydgruppen im Alkylrest, z.B. (Meth)acryloxyalkylpropanale, wie sie in der DE-A 27 22 097 beschrieben sind. Neben copolymerisierbaren Aldehyden kommen aber auch copolymerisierbare Monomere in Betracht, die reversibel geschützte Aldehydgruppen aufweisen, z.B. Halbacetale oder Acetale, die im alkalischen Bereich beständig, im sauren Bereich jedoch in Aldehyd und Alkohol gespalten werden. Vorzugsweise handelt es sich um $C_1$- bis $C_4$-Alkohole. Beispiele hierfür sind (Meth)acrylamidderivate, die im Amidteil endständige Acetalgruppen tragen, z.B. N-(1,1-Dimethoxybut-4-yl)methacrylamid oder Acrylamidobutyraldehyddiethoxyacetal.

Vorzugsweise ist die Komponente B der erfindungsgemäßen wäßrigen Zubereitungen jedoch von der Komponente A verschieden (d.h. vorzugsweise enthält das Polymerisat A keine Aldehydgruppen) und wird in die wäßrigen Polymerisatzubereitungen lediglich eingerührt. Selbstverständlich kann es sich bei der einzurührenden Komponente um ein vom Polymerisat A verschiedenes, wenigstens zwei Aldehydgruppen aufweisendes Polymerisat B handeln, das, sieht man einmal von den wenigstens eine Gruppierung I aufweisenden Bausteinen des Polymerisats A und den Aldehydgruppen aufweisenden Bausteinen des Polymerisats B ab, wie das Polymerisat A aufgebaut sein kann. Vorzugsweise handelt es sich bei der Komponente B jedoch um niedermolekulare Polyaldehyde, unter denen die Dialdehyde besonders bevorzugt sind. Beispielhaft genannt seien ein bis zehn C-Atome aufweisende 1,ω-Dialdehyde wie Glyoxal und Glutardialdehyd oder Malondialdehyd bzw. deren Acetale und Halbacetale. Es eignen sich aber auch Verbindungen wie Terephthaldialdehyd. Mit besonderem Vorteil wird Glyoxal verwendet. Geeignet sind auch Oligo- u. Polymere des Acroleins und/oder Methacroleins. Der pH-Wert der erfindungsgemäßen wäßrigen Polymerisatzubereitungen ist für den von den erfindungsgemäßen wäßrigen Polymerisatzubereitungen umfaßten Wirkmechanismus nicht besonders kritisch. Üblicherweise beträgt er 2 bis 12, vorzugsweise > 7 bis 12. Selbstverständlich können die erfindungsgemäßen wäßrigen Polymerisatzubereitungen zum Zwecke ihrer Anwendung mit von ihnen verschiedenen wäßrigen Polymerisatzubereitungen gemischt werden.

Vorzugsweise werden die erfindungsgemäßen wäßrigen Polymerisatdispersionen mit einem Feststoffgehalt

≥ 40, mit Vorteil ≥ 50 Vol.-%, bezogen auf die gesamte wäßrige Polymerisatdispersion, hergestellt. Regelmäßig wird der Feststoffgehalt anwendungstechnisch zweckmäßig 40 bis 70 Vol.-% betragen.

Hinsichtlich der gewünschten anwendungstechnischen Eigenschaften ist es günstig, wenn der gewichtsmittlere Durchmesser der dispergierten Polymerisatteilchen A im Bereich von 40 bis 300 nm liegt. Besonders günstige gewichtsmittlere Polymerisatteilchendurchmesser A betragen 50 bis 150 nm bzw. 50 bis 100 nm. Spielt die dynamische Viskosität der erfindungsgemäßen wäßrigen Polymerisatdispersion nicht die entscheidungswesentliche Rolle, ist die Verteilung der Polymerisatteilchendurchmesser A vorzugsweise eng. Die Uneinheitlichkeit der Polymerisatteilchendurchmesserverteilung A sollte unter 5, bevorzugt unter 2 liegen. Sie ergibt sich als Verhältnis von gewichtsmittlerem zu zahlenmittlerem Polymerisatteilchendurchmesser.

Die Herstellung des dispergierten Polymerisats A erfolgt gemäß der eingangs gegebenen "product by process" Definition des erfindungsgemäßen Gegenstandes. D.h. nach der Methode der radikalischen wäßrigen Emulsionspolymerisation im Beisein von Dispergiermitteln und radikalischen Polymerisationsinitiatoren.

Das Verhältnis der Wasserphase zur Gesamtmenge der in beiden Stufen verwendeten Monomeren wird dabei entsprechend dem gewünschten Feststoffgehalt der herzustellenden wäßrigen Polymerisatdispersion gewählt.

Die Monomerenzusammensetzung 1 kann dabei als ein derselben entsprechendes Monomerengemisch in Form einer wäßrigen Monomerenemulsion insgesamt ins Polvmerisationsgefäß vorgelegt oder diesem teilweise oder ganz im Ve auf der Polymerisationsstufe 1 in in wäßrigem Medium emulgierter oder in wasserfreier Form zudosiert werden. Natürlich kann die Monomerenzusammensetzung 1 auch nur bei integraler Betrachtung über die gesamte Polymerisationsstufe 1 realisiert werden. In diesem Fall wird dem Polymerisationsgefäß eine sich in ihrer Zusammensetzung zeitlich ändernde Monomerenmischung zugegeben, deren Zusammensetzung lediglich bei integraler Betrachtung der Monomerenzusammensetzung 1 entspricht. Diese letztere Verfahrensweise ist weniger bevorzugt. Nach Beendigung der Polymerisationsstufe 1 kann die Monomerenzusammensetzung 2 in entsprechender Weise dem Polymerisationsgefäß auf einmal zugesetzt oder teilweise oder ganz im Verlauf der Polymerisationsstufe 2 in in wäßrigem Medium emulgierter oder in wasserfreier Form zudosiert werden. Die erfindungsgemäß einzupolymerisierenden, wenigstens eine Gruppierung I aufweisenden, Monomeren werden vorzugsweise in die übrigen Monomeren bzw. deren Emulsionen eingemischt ins Polymerisationsgefäß gegeben. Vorzugsweise werden somit in beiden Polymerisationsstufen dem Polymerisationsgefäß über die jeweilige Polymerisationsstufe in ihrer Zusammensetzung zeitlich konstante Monomerengemische zugeführt. Letzeres erfolgt mit Vorteil so, daß der Polymerisationsumsatz der bereits ins Polymerisationsgefäß zugeführten Monomeren zu jedem Zeitpunkt nach Beginn der Polymerisation ≥ 90 Gew.-%, vorzugsweise ≥ 95 Gew.-% und besonders bevorzugt ≥ 98 Gew.-% beträgt.

In beiden Stufen wird die Polymerisation durch übliche radikalische Initiatoren ausgelöst. Als solche kommen alle diejenigen in Betracht, die in der Lage sind, eine radikalische wäßrige Emulsionspolymerisation auszulösen. Es kann sich dabei sowohl um Peroxide, z.B. um Alkalimetall- bzw. Ammoniumperoxodisulfat, als auch um Azoverbindungen wie Azo-bis-isobutyronitril oder 4,4'-Azo-bis-cyanvaleriansäure handeln. Mit Vorteil werden auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit oder Natriumhydrogensulfit und anstelle von Wasserstoffperoxid häufig Alkalimetallperoxodisulfate und/oder Ammoniumperoxodisulfat angewendet werden. Anstelle eines wasserlöslichen Eisen(II)-salzes wird häufig auch ein V-Salz oder eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Polymerisationsinitiatoren können in dem Fachmann an sich bekannter Weise in Abhängigkeit von ihrer Art auf einmal ins Polymerisationsgefäß vorgelegt oder diesem nach Maßgabe ihres Verbrauchs, d.h. gemäß Polymerisationsfortschritt, kontinuierlich zugegeben werden.

Polymerisationsdruck und Polymerisationstemperatur sind von eher untergeordneter Bedeutung. Im allgemeinen arbeitet man in beiden Polymerisationsstufen bei Temperaturen zwischen Raumtemperatur und 100°C, vorzugsweise 50 bis 95°C und besonders bevorzugt 60 bis 90°C. Die Anwendung von vermindertem oder erhöhtem Druck ist möglich, so daß die Polymerisationstemperatur auch 100°C überschreiten und bis zu 130°C und mehr betragen kann. Vorzugsweise werden leicht flüchtige Monomere wie Ethylen oder Butadien unter erhöhtem Druck polymerisiert. Zur pH-Wert Regulierung des Polymerisationsmediums werden während der erfindungsgemäßen radikalischen wäßrigen Emulsionspolymerisation vorzugsweise pH-Puffer wie $NaHCO_3$, D $Na_2CO_3$, Na-Acetat oder $Na_2P_2O_5$ zugesetzt. Mit Vorteil werden die pH-Puffer in die zuzuführenden wäßrigen Monomerenemulsionen eingearbeitet. Vorzugsweise wird auf pH 3 bis 6 gepuffert. Diese Maßnahme bedingt erhöhte Koagulat- und Stippen-(Mikrokoagulat)-freiheit der erfindungsgemäßen wäßrigen Polymerisatdispersionen. Alternativ zum Einsatz von Puffern kann die zuzuführende wäßrige Monomerenemulsion auch mittels einer starken Base (z.B. NaOH) auf pH 3 bis 6 teilneutralisiert zugeführt

werden. Der gebrauchsfertige End-pH-Wert der erfindungsgemäßen wäßrigen Polymerisatdispersionen wird in der Regel durch Zusatz von Basen wie Ammoniak, Alkalihydroxid (NaOH, KOH), Alkalioxid, Erdalkalioxid, Erdalkalihydroxid ($Ca(OH)_2$), ZnO, Metallcarbonate, -hydrogencarbonate oder Amine wie 2-Amino-2-methyl-1-propanol, Ethanolamin, Diethanolamin, Triethylamin, Morpholin, N,N-Dimethylethanolamin oder 2-Dimethylamino-2-methyl-1-propanol auf Werte oberhalb von 7, vorzugsweise bis 9, erhöht.

Zur Verbesserung der Reproduzierbarkeit und Einstellung definierter Teilchendurchmesser werden Polymerisatteilchenbildungsphase und Polymerisatteilchenwachstumsphase zweckmäßig dadurch in dem Fachmann an sich bekannter Weise voneinander entkoppelt, daß man ins Polymerisationsgefäß eine definierte Menge einer vorgebildeten wäßrigen Polymerisatdispersion (einen Saatlatex) vorlegt oder in selbigem eine solche in situ vorbildet. Die im weiteren Verlauf der radikalischen wäßrigen Emulsionspolymerisation zugesetzte Menge an Dispergiermittel wird dabei in der Regel so bemessen, daß die kritische Micellbildungskonzentration nicht mehr überschritten und so eine Polymerisatteilchenneubildung vermieden wird. Wird eine breite Teilchendurchmesserverteilung zur Erzeugung hochkonzentrierter wäßriger erfindungsgemaßer Polymeriatdispersionen angestrebt, wird man in der Regel dem Polymerisationsgefäß in an sich bekannter Weise zusätzlich während der radikalischen wäßrigen Emulsionspolymerisation Saat latex zufügen. Selbstverständlich kann man im Rahmen der erfindungsgemäßen radikalischen wäßrigen Emulsionspolymerisation auch das Molekulargewicht regelnde Mittel wie z.B. Mercaptane mitverwenden. Dies erleichtert in der Regel die Filmbildung (niedere MFT) und begünstigt dadurch das Glanzniveau. Häufig erfolgt die Polymerisation jedoch in Abwesenheit derselben. Wie die Verfahren der radikalischen Polymerisation generell, ist das erfindungsgemäße Verfahren dem Fachmann in bekannter Weise sowohl unter Inertgasatmosphäre (z.B. $N_2$, Ar) als auch unter Sauerstoff enthaltender Atmosphäre (z.B. Luft) anwendbar.

Als Dispergiermittel, die insbesondere die Stabilität der erfindungsgemäßen wäßrigen Polymerisatdispersion gewährleisten, kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, vorzugsweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Fettalkohole (EO-Grad: 3 bis 100, vorzugsweise 6 bis 50, Alkylrest: $C_6$ bis $C_{20}$), sowie Alkali- und Ammoniumsalze von Alkylsulfaten (Alkylrest: $C_8$ bis $C_{18}$), von Schwefelsäurehalbestern ethoxylierter Alkanole (EO-Grad: 1 bis 70, insbesondere 2 bis 10, Alkylrest: $C_{10}$ bis $C_{18}$) und ethoxylierter Alkylphenole (EO-Grad: 3 bis 100, vorzugsweise 6 bis 50, Alkylrest: $C_4$ bis $C_{18}$), von Alkylsulfonsäuren (Alkylrest: $C_{10}$ bis $C_{18}$) und von Alkylarylsulfonsäuren (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.
Als geeignete grenzflächenaktive Substanzen haben sich ferner Verbindungen der allgemeinen Formel I

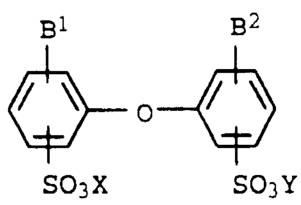

(I),

worin $B^1$ und $B^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $B^1$ und $B^2$ bevorzugt lineare oder verzweigte Alkylreste mit 6 bis 18 C-Atomen oder Wasserstoff, und insbesondere mit 6,12 und 16 C-Atomen, wobei $B^1$ und $B^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $B^1$ ein verzweigter Alkylrest mit 12 C-Atomen und $B^2$ Wasserstoff oder $B^1$ ist. Häufig werden technische

Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: $C_8$- bis $C_{36}$) als Dispergiermittel eingesetzt. Die Verbindungen I sind allgemein bekannt, z.B. aus der US-A 4,269,749, und im Handel erhältlich.

In der Regel beträgt die Menge an eingesetztem Dispergiermittel 0,5 bis 6, vorzugsweise 1 bis 5 und besonders bevorzugt 2 bis 4 Gew.-%, bezogen auf die radikalisch zu polymerisierenden Monomeren.

In die so erhältliche wäßrige Dispersion des wenigstens einen dispergierten Polymerisats A kann nun die Komponente B in einfacher Weise eingerührt werden. Handelt es sich bei der Komponente B gleichfalls um ein Dispersionspolymerisat, gilt bezüglich der zugehörigen Polymerisatteilchendurchmesser das bezüglich der Dispersionspolymerisatpartikel A gesagte.

Die erfindungsgemäßen wäßrigen Polymerisatdispersionen sind in befriedigender Weise lagerstabil. Bemerkenswerterweise wird durch die Nachvernetzung die Naßhaftung im wesentlichen nicht beeinträchtigt. In überraschender Weise verfügen Verfilmungen der erfindungsgemäßen wäßrigen Polymerisatdispersionen eine erhöhte Wasserfestigkeit und eine reduzierte Neigung zum Weißanlaufen. BT und MFT befinden sich in voll befriedigender Balance.

Neben den obligatorischen Bestandteilen A und B können die erfindungsgemäßen wäßrigen Polymerisatdispersionen auf den jeweiligen Verwendungszweck zugeschnitten die für diesen Verwendungszweck an sich üblichen Hilfsmittel enthalten. Lediglich eine Aldehydgruppe aufweisende Zusätze sollten weitgehend vermieden werden, da sie in der Regel das den erfindungsgemäßen wäßrigen Zubereitungen zugrundeliegende Wirkprinzip mindern. Sie sollten allenfalls in untergeordneten Mengen, d.h. höchstens in einer Anzahl vorhanden sein, die kleiner ist als die Anzahl der in Form der Komponente B eingebrachten Aldehydgruppen.

Die erfindungsgemäßen wäßrigen Polymerisatzubereitungen eignen sich insbesondere zum Beschichten, Kleben, Dichten oder Imprägnieren.

Typisches Einsatzgebiet der erfindungsgemäßen wäßrigen Polymerisatdispersionen ist der Bereich wäßriger, insbesondere an organischen Lösungsmitteln freien Beschichtungs- und Überzugsmittel, wo sich der aus der wäßrigen Polymerisatdispersion gebildete Film mit dem Substrat haftend verbindet.

Diesem Bereich zuzuordnen sind insbesondere Anstrichfarben für Innen- und Außenanwendungen im Bauwesen.

Ebenso sind industrielle Überzugsmittel zu nennen, insbesondere soweit bei ihrer Anwendung erhöhte Temperaturen nicht oder nur schwer zu verwirklichen sind. Beispiele solcher Überzüge sind Schlußlacke, Haftgrundierungen, Isolierungen und heißsiegelbare Klebschichten. Weiterhin sind die erfindungsgemäßen wäßrigen Polymerisatdispersionen zum Verfestigen von flächigen Fasergebilden geeignet. Während für die zuletzt genannten Anwendungen Filme der reinen Kunststoffdispersionen geeignet sind, werden sie für den Beschichtungs- und Anstrichsektor in der Regel pigmentiert und/oder mit Füllstoffen versetzt. Hier können gängige Rezepturen und Formulierungen angewendet werden, wobei stets die Vorteile von tiefer MFT, hoher BT, erhöhtem Glanz und erhöhter Reißdehnung zur Geltung kommen. Zu nennen sind hier insbesondere Lasuren, Lack-, Seidenglanz-, Glanz- und Hochglanzfarben sowie Massen zum Beschichten von Leder. Als besonders geeignete Substrate seien Holz, Leder, Metall, Kunststoff und mineralische Materialien genannt. Auch eignen sich die erfindungsgemäßen Polymerisate als Additiv in mineralischen Bindemitteln, insbesondere solchen auf Basis Zement.

Vor allem bei Anwendungen im Innenbereich ist es erforderlich, daß die erfindungsgemäßen wäßrigen Polymerisatdispersionen weitgehend frei von Restmonomeren und organischem Lösungsmittel sind. Dies kann in an sich bekannter Weise z.B. durch destillative Entfernung (insbesondere Wasserdampfdestillation) oder durch Abstreifen mit einem inerten Gas erreicht werden. Zweckmäßigerweise wird im Fall einer niedermolekularen Komponente B diese Maßnahme vor deren Zusatz durchgeführt. Selbstverständlich können auch Verfahren der radikalischen Nachpolymerisation angewendet werden (insbesondere unter Einwirkung von Redoxinitiatorsystemen) wie sie z.B. in der DE-A 44 35 423, DE-A 44 19 518 sowie in der DE-A 44 35 422 aufgeführt oder als Stand der Technik zitiert sind.

Beispiel

In einem Polymerisationsgefäß wurde ein Gemisch aus

| | |
|---|---|
| 380 g | Wasser, |
| 25 g | einer 20 gew.-%igen Lösung von ethoxyliertem Fettalkohol (Alkylrest: $C_{16}$/$C_{18}$-Gemisch, mittlerer EO-Grad: 18) = Emulgatorlösung 2, |
| 120 g | einer 15 gew.-%igen wäßrigen Lösung von Natriumlaurylsulfat = Emulgatorlösung 1, |
| 20 g | Zulauf 1 und |
| 30 g | Zulauf 3 |

vorgelegt und unter Rühren innerhalb von 10 min auf 85°C erhitzt. Nach 10-minütigem Rühren bei 85°C wurde unter Aufrechterhaltung der 85°C die Restmenge an Zulauf 1 dem Polymerisationsgefäß innerhalb von 1,5 h kontinuierlich zudosiert. Zeitgleich beginnend mit der Restmenge an Zulauf 1 wurde innerhalb von 2 h die Restmenge an Zulauf 3 dem Polymerisationsgefäß kontinuierlich zugeführt. Nach Beendigung von Zulauf 1 wurde unter weiterer Aufrechterhaltung der 85°C Zulauf 2 dem Polymerisationsgefäß innerhalb von 30 min kontinuierlich zugeführt. Danach wurde das Polymerisationsgemisch noch 2 h bei 85°C gerührt. Anschließend wurde auf 25°C abgekühlt, 6 ml konzentrierte wäßrige Ammoniaklösung zugegeben und die Dispersion über ein Filter von 250 µm Maschenweite filtriert.

Zulauf 1:

| | |
|---|---|
| 200 g | Wasser, |
| 420 g | n-Butylacrylat, |
| 330 g | Methylmethacrylat, |
| 10 g | 1-(2-Methacryloyloxyethyl)imidazolin-2-on, |
| 7,5 g | Acrylsäure, |
| 8,5 g | 50 gew.-%ige wäßrige Lösung von Acrylamid, |
| 4,3 g | Emulgatorlösung 1, |
| 37,5 g | Emulgatorlösung 2. |

Zulauf 2:

| | |
|---|---|
| 70 g | Wasser, |
| 250 g | Methylmethacrylat, |
| 10 g | 1-(2-Methacryloyloxyethyl)imidazolin-2-on, |
| 7,5 g | Acrylsäure, |
| 1,5 g | 50 gew.-%ige wäßrige Lösung von Acrylamid, |
| 13,3 g | Emulgatorlösung 1, |
| 37,5 g | Emulgatorlösung 2. |

Zulauf 3:

| | |
|---|---|
| 200 g | Wasser |
| 1,5 g | Natriumperoxodisulfat. |

In je 500 ml der resultierenden wäßrigen Polymerisatdispersion wurden Zg einer 40 gew.-%igen wäßrigen Glyoxallösung eingerührt. Die dabei erhaltenen wäßrigen Polymerisatdispersionen wurden wie folgt auf Wasseraufnahme und Weißanlaufbeständigkeit geprüft:

a) Bestimmung der Wasseraufnahme (WA)

Aus den Glyoxal enthaltenden wäßrigen Polymerisatdispersionen wurden, nach Verdünnung mit Wasser auf einen Feststoffgehalt von 25 Gew.-%, ca. 500 µm dicke Polymerfilme hergestellt, indem man in einer Silikonpfanne eine definierte Menge wäßriger Polymerisatdispersion über einen Zeitraum von 5 Tagen bei 23°C und 50 % relativer Luftfeuchtigkeit verfilmte.

Anschließend wurden die Polymerfilme der Silikonpfanne entnommen und flächige quadratische (ca. 4 $cm^2$) Filmstücke ausgestanzt. Diese wurden während 24 h bei 23°C in 100 ml vollentsalztes Wasser gelegt.

Die Wasseraufnahme der Probenstücke wurde gravimetrisch ermittelt. Ihre Angabe erfolgt in der Tabelle in Gew.-%, bezogen auf das Ausgangsgewicht des Probekörpers.

b) Bestimmung der Weißanlaufbeständigkeit (WB)

Die Glyoxal enthaltenden wäßrigen Polymerisatzubereitungen wurden in einer Naßschichtdicke von 200 µm auf eine Glasplatte aufgerakelt und über einen Zeitraum von 24 h bei 23°C und 50 % relativer Luftfeuchtigkeit verfilmt. Die so beschichteten Glasplatten wurden bei 23°C während 4 h senkrecht in einen mit voll entsalztem Wasser gefüllten Trog gestellt.

Anschließend wurden die Platten aus dem Trog entfernt und die Filme auf Weißanlaufen und Blasenbildung visuell geprüft.

Die erhaltenen Ergebnisse zeigt die Tabelle.

Tabelle

| Menge Dispersion | Z | Molverhältnis V Ureid-/ Aldehydgruppe | WA (Gew.-%) | WB |
|---|---|---|---|---|
| 500 ml | - | - | 28,2 | viele kleine Blasen, sehr starke Trübung |
| 500 ml | 0,43 | 1:0,25 | 22,3 | viele kleine Blasen, starke Trübung |
| 500 ml | 0,86 | 1:0,5 | 20,1 | keine Blasenbildung, schwache Trübung |
| 500 ml | 1,72 | 1:1 | 18,9 | keine Blasenbildung, keine Trübung (klarer Film) |

Blockfestigkeit, Naßhaftung und tiefe Mindestfilmbildetemperatur waren gegeben.

## Patentansprüche

**1.** Wäßrige Polymerisatdispersion enthaltend

A) wenigstens ein dispergiertes Polymerisat A, dadurch erhältlich, daß man eine Zusammensetzung 1 von wenigstens eine ethylenisch ungesättigte Gruppe aufweisenden Verbindungen (Monomeren) nach der Methode der radikalischen wäßrigen Emulsionspolymerisation bis zu einem Umsatz von wenigstens 90 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation mit der Maßgabe polymerisiert (Polymerisationsstufe 2), daß

a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

c) der Differenzbetrag zwischen $Tg^1$ und $Tg^2$ wenigstens 20°C beträgt,

d) die Menge derjenigen Zusammensetzung i, der der tiefere Grenzwert $Tg^i$ zuzuordnen ist, bezogen auf die Gesamtmenge der Zusammensetzungen 1 und 2, 40 bis 90 Gew.-% beträgt,

e) zusätzlich zu den Monomeren der Zusammensetzungen 1 und 2 wenigstens ein von diesen Monomeren verschiedenes, wenigstens eine ethylenisch ungesättigte Gruppe und wenigstens eine Gruppe der allgemeinen Formel I

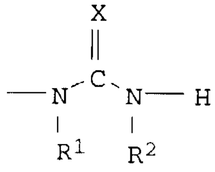

(I),

in der die Variablen bedeuten:

X: 0 oder S und

$R^1$, $R^2$: jedes von beiden Wasserstoff oder eine $C_1$- bis $C_5$-Alkylgruppe, oder beide zusammen eine überbrückende $C_2$- bis $C_4$-Alkylengruppe, die bis zu zweifach mit einer $C_1$- bis $C_4$-Alkoxygruppe und/oder Hydroxylgruppe substituiert sein kann,

aufweisendes Haftmonomeres in einer Menge von 0,1 bis 30 Gew.-%, bezogen auf die Gesamtmenge der zu polymerisierenden Monomeren, einpolymerisiert wird,

B) wenigstens eine, wenigstens zwei ungeschützte und/oder reversibel geschützte Aldehydgruppen aufweisende, chemische Verbindung B, mit der Maßgabe, daß das molare Verhältnis V der in der wäßrigen Polymerisatdispersion insgesamt enthaltenen Gruppierungen I zu der in der wäßrigen Polymerisatdispersion in Form von Verbindungen B insgesamt enthaltenen molaren Menge an ungeschützten und/ oder reversibel geschützten Aldehydgruppen 0,1 bis 10 zu 1 beträgt, und

C) kein Carbonsäurehydrazid.

**2.** Wäßrige Polymerisatdispersion nach Anspruch 1, wobei die Menge derjenigen Monomerenzusammensetzung i, der der tiefere Grenzwert $Tg^i$ zuzuordnen ist, bezogen auf die Gesamtmenge der Zusammensetzungen 1 und 2, 60 bis 80 Gew.-% beträgt.

**3.** Wäßrige Polymerisatdispersion nach Anspruch 1 oder 2, wobei der Differenzbetrag zwischen $Tg^1$ und $Tg^2$ 20 bis 150°C beträgt.

**4.** Wäßrige Polymerisatdispersion nach Anspruch 1 bis 3, wobei die Polymerisationsstufe 1 diejenige Monomerenzusammensetzung betrifft, der der tiefere Grenzwert $Tg^i$ zuzuordnen ist.

**5.** Wäßrige Polymerisatdispersion nach Anspruch 1 bis 3, wobei die Polymerisationsstufe 1 diejenige Monomerenzusammensetzung betrifft, der der höhere Grenzwert $Tg^i$ zuzuordnen ist.

**6.** Wäßrige Polymerisatdispersion nach Anspruch 1 bis 5, wobei der Anteil der wenigstens eine ethylenisch ungesättigte Gruppe und wenigstens eine Gruppe der allgemeinen Formel I aufweisenden Monomeren, bezogen auf die Gesamtmenge der zu polymerisierenden Monomeren, 0,5 bis 10 Gew.-% beträgt.

**7.** Wäßrige Polymerisatdispersion nach Anspruch 1 bis 6, wobei als wenigstens eine ethylenisch ungesättigte Gruppe und wenigstens eine Gruppe der allgemeinen Formel I aufweisendes Monomeres 1-(2-methacryloyl-oxyethyl)imidazolin-2-on mitverwendet wird.

**8.** Wäßrige Polymerisatdispersion nach Anspruch 1 bis 7, wobei diejenige Monomerenzusammensetzung i, der der höhere Grenzwert $Tg^i$ zuzuordnen ist, Vorvernetzung bewirkende Monomere umfaßt.

**9.** Wäßrige Polymerisatdispersion nach Anspruch 1 bis 6, wobei sich die Monomerenzusammensetzungen 1 und 2 ausschließlich aus der Monomerengruppe umfassend n-Butylacrylat, 2-Ethylhexylacrylat, Ethylacrylat, Methylmethacrylat, n-Butylmethacrylat, Styrol, Acrylnitril, Acrylsäure, Methacrylsäure, Acrylamid, Methacrylamid, Hydroxyethylacrylat, Hyroxyethylmethacrylat, Acrylamidoproponsulfonsäure sowie Vinylsulfonsäure und deren Alkalimetallsalze, rekrutieren.

**10.** Wäßrige Polymerisatdispersion nach Anspruch 1 bis 9, deren MFT ohne Zusatz von Filmbildehilfsmittel ≤ 30°C beträgt.

**11.** Wäßrige Polymerisatdispersion nach Anspruch 1 bis 10, wobei die Gesamtmenge der wenigstens eine ethylenisch ungesättigte Gruppe und wenigstens eine Gruppierung I aufweisenden Monomeren ausschließlich in der Polymerisationsstufe 2 einpolymerisiert wird und die Polymerisationsstufe 2 die Monomerenzusammensetzung i mit dem tiefer gelegenen $Tg^i$ umfaßt.

**12.** Wäßrige Polymerisatdispersion nach Anspruch 1 bis 10, wobei 20 bis 100 mol-% der Gesamtmenge der wenigstens eine Gruppierung I aufweisenden Monomeren in der Polymerisationsstufe 1 einpolymerisiert werden und die Polymerisationsstufe 1 die Monomerensetzung i mit dem tiefer gelegenen $Tg^i$ umfaßt.

**13.** Wäßrige Polymerisatdispersion nach Anspruch 1 bis 12, wobei die Komponente B Glyoxal und/oder Glutardialdehyd ist.

**14.** Wäßrige Polymerisatdispersion nach Anspruch 1 bis 13, wobei das molare Verhältnis V 1:0,5 bis 1 beträgt.

**15.** Wäßrige Polymerisatdispersion nach Anspruch 1 bis 14, wobei der Feststoffgehalt 40 bis 70 Vol.-% beträgt.

**16.** Wäßrige Polymerisatdispersion nach Anspruch 1 bis 15, wobei der gewichtsmittlere Polymerisatteilchendurchmesser der Polymerisatteilchen A 50 bis 150 nm beträgt.

**17.** Wäßrige Polymerisatdispersion nach Anspruch 1 bis 16, wobei einerseits die Monomerenzusammensetzung i mit dem tieferen $Tg^i$-Wert, bezogen auf die Monomerenzusammensetzung i, 10 bis 40 Gew.-% an solchen Monomeren umfaßt, deren Homopolymerisate Tg-Werte oberhalb des tieferen $Tg^i$ aufweisen und andererseits die Monomerenzusammensetzung i mit dem höheren $Tg^i$-Wert in gleicher Weise bezogen gleichzeitig 0 bis 40 Gew.-% an solchen Monomeren umfaßt, deren Homopolymerisate Tg-Werte unterhalb des höheren $Tg^i$ aufweisen.

**18.** Wäßrige Polymerisatdispersion nach Anspruch 1 bis 17, wobei sowohl die Monomerenzusammensetzung 1 als auch die Monomerenzusammensetzung 2 als ein denselben entsprechendes Monomerengemisch, das gegebenenfalls in wäßrigem Medium voremulgiert ist, im Verlauf der Polymerisationsstufen 1, 2 dem Polymerisationsgefäß kontinuierlich zudosiert werden und die erfindungsgemäß in der jeweiligen Polymerisationsstufe einzupolymerisierenden wenigstens eine ethylenisch ungesättigte Gruppe und wenigstens eine Gruppierung I aufweisenden Monomeren dem Polymerisationsgefäß in das entsprechende Monomerengemisch 1, 2 eingemischter Form zugeführt werden.

**19.** Wäßrige Polymerisatdispersion nach Anspruch 18, wobei die kontinuierliche Monomerenzufuhr so erfolgt, daß der Polymerisationsumsatz der bereits ins Polymerisationsgefäß zugeführten Monomeren, zu jedem Zeitpunkt nach Beginn der Polymerisation > 90 Gew.-%, vorzugsweise ≥ 95 Gew.-% und besonders ≥ 98 Gew.-% beträgt.

**20.** Verwendung einer wäßrigen Polymerisatdispersion gemäß Anspruch 1 bis 19 als Mittel zum Kleben, Beschichten und/oder Imprägnieren.

**21.** Wäßrige Farbformulierung, enthaltend eine wäßrige Polymerisatdispersion gemäß Anspruch 1 bis 19 als Bindemittel.

**22.** Wäßrige Beschichtungs-, Imprägnier- oder Klebezubereitung, enthaltend eine wäßrige Polymerisatdispersion gemäß Anspruch 1 bi 19.

**23.** Substrat, das mit einer wäßrigen Zubereitung beschichtet, imprägniert und/oder verklebt ist, die eine wäßrige Polymerisatdispersion nach Anspruch 1 bis 19 enthält.

**24.** Verfahren zur Herstellung einer wäßrigen Polymerisatdispersion, dadurch gekennzeichnet, daß man

A) eine Zusammensetzung 1 von wenigstens eine ethylenisch ungesättigte Gruppe aufweisenden Verbindungen (Monomeren) nach der Methode der radikalischen wäßrigen Emulsionspolymerisation bis zu einem Umsatz von wenigstens 90 Gew.-%, bezogen auf die zu polymerisierende Monomerenzusammensetzung 1, polymerisiert (Polymerisationsstufe 1) und daran anschließend im Beisein des Produktgemisches der Polymerisationsstufe 1 eine Zusammensetzung 2 von wenigstens eine ethylenisch ungesättigte Gruppe aufweisenden Verbindungen (Monomeren) nach der Methode der radikalischen wäßrigen Emulsionspolymerisation mit der Maßgabe polymerisiert (Polymerisationsstufe 2), daß

a) die Zusammensetzung 1 so beschaffen ist, daß bei alleiniger statistischer Copolymerisation der Zusammensetzung 1 ein Polymerisat 1 erhalten würde, dessen Glasübergangstemperatur mit zunehmendem Molekulargewicht dem Grenzwert $Tg^1$ zustrebt,

b) die Zusammensetzung 2 so beschaffen ist, daß bei alleiniger statistischer Copolymerisation der Zusammensetzung 2 ein Polymerisat 2 erhalten würde, dessen Glasübergangstemperatur mit zunehmendem Molekulargewicht dem Grenzwert $Tg^2$ zustrebt,

c) der Differenzbetrag zwischen $Tg^1$ und $Tg^2$ wenigstens 20°C beträgt,

d) die Menge derjenigen Zusammensetzung i, der der tiefere Genzwert $Tg^i$ zuzuordnen ist, bezogen auf die Gesamtmenge der Zusammensetzungen 1 und 2, 40 bis 90 Gew.-% beträgt,

e) zusätzlich zu den Monomeren der Zusammensetzungen 1 und 2 wenigstens ein von diesen Monomeren verschiedenes, wenigstens eine ethylenisch ungesättigte Gruppe und wenigstens eine Gruppe der allgemeinen Formel I

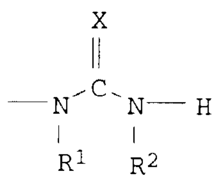

(I),

in der die Variablen bedeuten:

X: O oder S und

$R^1$, $R^2$: jedes von beiden Wasserstoff oder eine $C_1$- bis $C_5$-Alkylgruppe, oder beide zusammen eine überbrückende $C_2$- bis $C_4$-Alkylengruppe, die bis zu zweifach mit einer $C_1$- bis $C_4$-Alkoxygruppe und/oder Hydroxylgruppe substituiert sein kann,

aufweisendes Haftmonomeres in einer Menge von 0,1 bis 30 Gew.-%, bezogen auf die Gesamtmenge der zu polymerisierenden Monomeren, einpolymerisiert wird, und

B) der unter A) erhaltenen wäßrigen Polymerisatdispersion wenigstens eine, wenigstens zwei ungeschützte und/oder reversibel geschützte Aldehydgruppen aufweisende, chemische Verbindung B zusetzt, mit der Maßgabe, daß das molare Verhältnis V der in der wäßrigen Polymerisatdispersion A insgesamt enthaltenen Gruppierungen I zu der in Form von Verbindungen B insgesamt zugesetzten molaren Menge an ungeschützten und/oder reversibel geschützten Aldehydgruppen 0,1 bis 10 zu 1 beträgt, und

C) die wäßrige Polymerisatdispersion von Carbonsäurehydraziden freihält.

## Claims

**1.** An aqueous polymer emulsion containing

A) at least one dispersed polymer A obtainable by polymerizing a composition 1 of compounds (monomers) having at least one ethylenically unsaturated group by the free radical aqueous emulsion polymerization method to a conversion of at least 90% by weight, based on the monomer composition 1 to be polymerized, (polymerization stage 1) and then polymerizing, in the presence of the product mixture of polymerization stage 1, a composition 2 of compounds (monomers) having at least one ethylenically unsaturated group by the free radical aqueous emulsion polymerization method (polymerization stage 2), with the proviso that

a) the composition 1 is such that random copolymerization of the composition 1 alone would give a polymer 1 whose glass transition temperature tends to the limit $Tg^1$ with increasing molecular weight,

b) the composition 2 is such that random copolymerization of the composition 2 alone would give a polymer 2 whose glass transition temperature tends to the limit $Tg^2$ with increasing molecular weight,

c) the difference between $Tg^1$ and $Tg^2$ is at least 20°C,

d) the amount of that composition i which is to be assigned the lower limit $Tg^i$ is from 40 to 90% by weight, based on the total amount of the compositions 1 and 2, and

e) in addition to the monomers of the compositions 1 and 2, at least one adhesion-promoting monomer which differs from these monomers and has at least one ethylenically unsaturated group and at least one group of the formula I

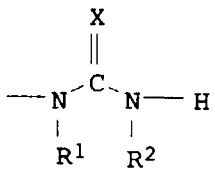

(I),

where

X is O or S and

$R^1$ and $R^2$ are both hydrogen or $C_1$-$C_5$-alkyl or both together form a bridging $C_2$-$C_4$-alkylene group which may be monosubstituted or disubstituted by $C_1$-$C_4$-alkoxy or hydroxyl,

is polymerized in an amount of from 0.1 to 30% by weight, based on the total amount of the monomers to be polymerized,

B) at least one chemical compound B having at least two unprotected and/or reversibly protected aldehyde groups, with the proviso that the molar ratio R of all the groups I contained in the aqueous polymer emulsion to the total molar amount of unprotected and/or reversibly protected aldehyde groups contained in the aqueous polymer emulsion in the form of compounds B is from 0.1:1 to 10:1, and

C) no carboxylic hydrazide.

**2.** An aqueous polymer emulsion as claimed in claim 1, wherein the amount of the monomer composition i which is to be assigned the lower limit $Tg^i$ is from 60 to 80% by weight, based on the total amount of the compositions 1 and 2.

**3.** An aqueous polymer emulsion as claimed in claim 1 or 2, wherein the difference between $Tg^1$ and $Tg^2$ is from 20 to 150°C.

**4.** An aqueous polymer emulsion as claimed in any of claims 1 to 3, wherein the polymerization stage 1 relates to the monomer composition which is to be assigned the lower limit $Tg^i$.

**5.** An aqueous polymer emulsion as claimed in any of claims 1 to 3, wherein the polymerization stage 1 relates to the monomer composition which is to be assigned the higher limit $Tg^i$.

**6.** An aqueous polymer emulsion as claimed in any of claims 1 to 5, wherein the amount of the monomers having at least one ethylenically unsaturated group and at least one group of the formula I is from 0.5 to 10% by weight, based on the total amount of the monomers to be polymerized.

**7.** An aqueous polymer emulsion as claimed in any of claims 1 to 6, wherein 1-(2-methacryloyloxyethyl)imidazolin-2-one is used concomitantly as the monomer having at least one ethylenically unsaturated group and at least one group of the formula I.

**8.** An aqueous polymer emulsion as claimed in any of claims 1 to 7, wherein the monomer composition i which is to be assigned the higher limit $Tg^i$ comprises monomers effecting precrosslinking.

**9.** An aqueous polymer emulsion as claimed in any of claims 1 to 6, wherein the monomer compositions 1 and 2 are chosen exclusively from the monomer group comprising n-butyl acrylate, 2-ethylhexyl acrylate, ethyl acrylate, methyl methacrylate, n-butyl methacrylate, styrene, acrylonitrile, acrylic acid, methacrylic acid, acrylamide, methacrylamide, hydroxyethyl acrylate, hydroxyethyl methacrylate, acrylamidopropanesulfonic acid and vinylsulfonic acid and the alkali metal salts thereof.

**10.** An aqueous polymer emulsion as claimed in any of claims 1 to 9, whose MFT is ≤ 30°C without the addition of film formation assistants.

**11.** An aqueous polymer emulsion as claimed in any of claims 1 to 10, wherein the total amount of the monomers having at least one ethylenically unsaturated group and at least one group I is polymerized exclusively in polymerization stage 2, and the polymerization stage 2 comprises the monomer composition i having the lower $Tg^i$.

**12.** An aqueous polymer emulsion as claimed in any of claims 1 to 10, wherein from 20 to 100 mol% of the total amount of the monomers having at least one group I are polymerized in the polymerization stage 1, and the polymerization stage 1 comprises the monomer composition i having the lower $Tg^i$.

**13.** An aqueous polymer emulsion as claimed in any of claims 1 to 12, wherein the component B is glyoxal or glutardialdehyde.

**14.** An aqueous polymer emulsion as claimed in any of claims 1 to 13, wherein the molar ratio R is from 1:0.5 to 1:1.

**15.** An aqueous polymer emulsion as claimed in any of claims 1 to 14, wherein the solids content is from 40 to 70% by volume.

**16.** An aqueous polymer emulsion as claimed in any of claims 1 to 15, wherein the weight average polymer particle diameter of the polymer particles A is from 50 to 150 nm.

**17.** An aqueous polymer emulsion as claimed in any of claims 1 to 16, wherein, on the one hand, the monomer composition i having the lower $Tg^i$ value comprises from 10 to 40% by weight, based on the monomer composition i, of monomers whose homopolymers have Tg values above the lower $Tg^i$ and, on the other hand, the monomer composition i having the higher $Tg^i$ value simultaneously comprises from 0 to 40% by weight, based on the monomer composition i, of monomers whose homopolymers have Tg values below the higher $Tg^i$.

**18.** An aqueous polymer emulsion as claimed in any of claims 1 to 17, wherein both the monomer composition 1 and the monomer composition 2 are metered continuously into the polymerization vessel in the course of the polymerization stages 1, 2 as a corresponding monomer mixture which may be preemulsified in an aqueous medium, and the monomers which are to be polymerized according to the invention in the particular polymerization stage and have at least one ethylenically unsaturated group and at least one group I are fed to the polymerization vessel after being mixed in the corresponding monomer mixture 1, 2.

**19.** An aqueous polymer emulsion as claimed in claim 18, wherein the continuous monomer feed is carried out in such a way that the polymerization conversion of the monomers already fed into the polymerization vessel is ≥ 90, preferably ≥ 95, in particular ≥ 98, % by weight at any time after the beginning of the polymerization.

**20.** The use of an aqueous polymer emulsion as claimed in any of claims 1 to 19 as a material for adhesion, coating or impregnation.

**21.** An aqueous color formualtion containing an aqueous polymer emulsion as claimed in any of claims 1 to 19 as a binder.

**22.** An aqueous coating, impregnating or adhesive formulation containing an aqueous polymer emulsion as claimed in any of claims 1 to 19.

**23.** A substrate which is coated, impregnated or adhesively bonded with an aqueous formulation which contains an aqueous polymer emulsion as claimed in any of claims 1 to 19.

**24.** A process for the preparation of an aqueous polymer emulsion, wherein

A) a composition 1 of compounds (monomers) having at least one ethylenically unsaturated group is polymerized by the free radical aqueous emulsion polymerization method to a conversion of at least 90% by weight,

based on the monomer composition 1 to be polymerized, (polymerization stage 1) and a composition 2 of compounds (monomers) having at least one ethylenically unsaturated group is then polymerized in the presence of the product mixture of polymerization stage 1 by the free radical aqueous emulsion polymerization method (polymerization stage 2), with the proviso that

a) the composition 1 is such that random copolymerization of the composition 1 alone would give a polymer 1 whose glass transition temperature tends to the limit $Tg^1$ with increasing molecular weight,

b) the composition 2 is such that random copolymerization of the composition 2 alone would give a polymer 2 whose glass transition temperature tends to the limit $Tg^2$ with increasing molecular weight,

c) the difference between $Tg^1$ and $Tg^2$ is at least 20°C,

d) the amount of that composition i which is to be assigned the lower limit $Tg^i$ is from 40 to 90% by weight, based on the total amount of the compositions 1 and 2, and

e) in addition to the monomers of the compositions 1 and 2, at least one adhesion-promoting monomer which differs from these monomers and has at least one ethylenically unsaturated group and at least one group of the formula I

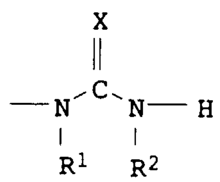

(I),

where

X is O or S and

$R^1$ and $R^2$ are both hydrogen or $C_1$-$C_5$-alkyl or both together form a bridging $C_2$-$C_4$-alkylene group which may be monosubstituted or disubstituted by $C_1$-$C_4$-alkoxy or hydroxyl,

is polymerized in an amount of from 0.1 to 30% by weight, based on the total amount of the monomers to be polymerized,

B) at least one chemical compound B having at least two unprotected and/or reversibly protected aldehyde groups is added to the aqueous polymer emulsion obtained under A), with the proviso that the molar ratio R of all the groups I contained in the aqueous polymer emulsion A to the total molar amount of unprotected and/or reversibly protected aldehyde groups added in the form of compounds B is from 0.1:1 to 10:1,
and

C) no carboxylic hydrazides are added to the aqueous polymer emulsion.

## Revendications

**1.** Dispersion aqueuse de polymères contenant

A) au moins un polymère A dispersé pouvant être obtenu par polymérisation d'une composition 1 de composés (monomères) ayant au moins un groupement à insaturation éthylénique, selon le procédé de polymérisation radicalaire en émulsion aqueuse jusqu'à un taux de conversion d'au moins 90% en poids, par rapport à la composition de monomères 1 à polymériser, (étape de polymérisation 1), immédiatement suivie, en présence du produit réactionnel de l'étape de polymérisation 1, de la polymérisation d'une composition 2 de composés (monomères) ayant au moins un groupement à insaturation éthylénique, selon le procédé de polymérisation radicalaire en émulsion aqueuse, (étape de polymérisation 2), étant spécifié que

a) la composition 1 est telle que si l'on copolymérisait cette composition 1 seule de façon statistique, on obtiendrait un polymère 1 dont la température de transition vitreuse convergerait vers la valeur limite $Tg^1$ lorsque la masse moléculaire augmente,
b) la composition 2 est telle que si l'on copolymérisait cette composition 2 seule de façon statistique, on obtiendrait un polymère 2 dont la température de transition vitreuse convergerait vers la valeur limite $Tg^2$ lorsque la masse moléculaire augmente,
c) la différence entre $Tg^1$ et $Tg^2$ s'élève au minimum à 20°C,
d) la quantité de la composition i possédant la valeur limite $Tg^i$ la plus basse s'élève à 40-90% en poids, par rapport à la quantité totale des compositions 1 et 2,
e) on incorpore en liaison polymère, en plus des monomères des compositions 1 et 2, au moins un monomère de greffage, différent de ces monomères, ayant au moins un groupement à insaturation éthylénique et au moins un groupement de formule générale I

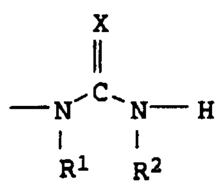

(I),

dans laquelle les variables représentent :

X : O ou S et
$R^1$, $R^2$ : chacun des deux un atome d'hydrogène ou un groupement alkyle en $C_1$-$C_5$, ou bien les deux forment ensemble un groupement pontant alkylène en $C_2$-$C_4$, pouvant être substitué jusqu'à deux fois par un groupement alcoxy en $C_1$-$C_4$ et/ou par un groupement hydroxyle,

en une quantité de 0,1-30% en poids, par rapport à la quantité totale de monomères à polymériser,

B) au moins un composé chimique B ayant au moins deux groupements aldéhyde non protégés et/ou protégés de façon réversible, étant spécifié que, le rapport molaire V de la totalité des groupements I contenus dans la dispersion aqueuse de polymères à la quantité molaire totale de groupements aldéhyde, non protégés ou protégés de façon réversible, contenus dans la dispersion aqueuse de polymères sous forme de composés B, s'élève de 0,1-10 à 1, et
C) aucun hydrazide d'acide carboxylique.

2. Dispersion aqueuse de polymères selon la revendication 1, pour laquelle la quantité de la composition de monomères i ayant la température limite $Tg^i$ la plus basse s'élève à 60-80% en poids, par rapport à la quantité totale des compositions 1 et 2.

3. Dispersion aqueuse de polymères selon la revendication 1 ou 2, pour laquelle la différence entre $Tg^1$ et $Tg^2$ s'élève à 20-150°C.

4. Dispersion aqueuse de polymères selon l'une quelconque des revendications 1 à 3, pour laquelle l'étape de polymérisation 1 est réalisée avec la composition de monomères présentant la valeur limite $Tg^i$ la plus basse.

5. Dispersion aqueuse de polymères selon l'une quelconque des revendications 1 à 3, pour laquelle l'étape de polymérisation 1 est réalisée avec la composition de monomères présentant la valeur limite $Tg^i$ la plus haute.

6. Dispersion aqueuse de polymères selon l'une quelconque des revendications 1 à 5, pour laquelle la proportion des monomères ayant au moins un groupement à insaturation éthylénique et au moins un groupement de formule générale I s'élève à 0,5-10% en poids, par rapport à la quantité totale de monomères à polymériser.

7. Dispersion aqueuse de polymères selon l'une quelconque des revendications 1 à 6 pour laquelle on utilise de la 1-(2-méthacryloyloxyéthyl)imidazolin-2-one, en tant que monomère ayant au moins un groupement à insaturation éthylénique et au moins un groupement de formule générale I.

8. Dispersion aqueuse de polymères selon l'une quelconque des revendications 1 à 7, pour laquelle la composition de monomères i présentant la valeur limite $Tg^i$ la plus élevée comprend des monomères préréticulants.

9. Dispersion aqueuse de polymères selon l'une quelconque des revendications 1 à 6, pour laquelle les compositions de monomères 1 et 2 sont constituées exclusivement d'éléments du groupe de monomères comprenant l'acrylate de n-butyle, l'acrylate de 2-éthylhexyle, l'acrylate d'éthyle, le méthacrylate de méthyle, le méthacrylate de n-butyle, le styrène, l'acrylonitrile, l'acide acrylique, l'acide méthacrylique, l'acrylamide, le méthacrylamide, l'acrylate d'hydroxyéthyle, le méthacrylate d'hydroxyéthyle, l'acide acrylamidopropiosulfonique ainsi que l'acide vinylsulfonique et leurs sels de métaux alcalins.

10. Dispersion aqueuse de polymères selon l'une quelconque des revendications 1 à 9, dont la MFT est ≤ 30°C sans ajout d'agent aidant à la formation d'un film.

11. Dispersion aqueuse de polymères selon l'une quelconque des revendications 1 à 10, pour laquelle la totalité des monomères ayant au moins un groupement à insaturation éthylénique et au moins un groupe I est incorporée en liaison polymère exclusivement pendant l'étape de polymérisation 2, l'étape de polymérisation 2 concernant la composition de monomères i présentant la $Tg^i$ la plus basse.

12. Dispersion aqueuse de polymères selon l'une quelconque des revendications 1 à 10, pour laquelle 20-100% en moles de la totalité des monomères ayant au moins un groupe I est incorporée en liaison polymère pendant l'étape de polymérisation 1, l'étape de polymérisation 1 concernant la composition de monomères i présentant la $Tg^i$ la plus basse.

13. Dispersion aqueuse de polymères selon l'une quelconque des revendications 1 à 12, pour laquelle le composant B est le glyoxal et/ou le glutardialdéhyde.

14. Dispersion aqueuse de polymères selon l'une quelconque des revendications 1 à 13, pour laquelle le rapport en moles V vaut de 1:0,5 à 1.

15. Dispersion aqueuse de polymères selon l'une quelconque des revendications 1 à 14, pour laquelle la teneur en extrait sec s'élève à 40-70% en volume.

16. Dispersion aqueuse de polymères selon l'une quelconque des revendications 1 à 15, pour laquelle la moyenne en poids du diamètre de particules polymères des particules de polymère A s'élève à 50-150 nm.

17. Dispersion aqueuse de polymères selon l'une quelconque des revendications 1 à 16, pour laquelle, d'une part, la composition de monomères i ayant la valeur $Tg^i$ la plus faible comprend 10-40% en poids, par rapport à la composition de monomères i, de monomères dont les homopolymères ont des valeurs de Tg supérieures à la valeur $Tg^i$ la plus faible et, d'autre part, la composition de monomères i ayant la valeur $Tg^i$ la plus élevée comprend dans le même temps 0-40% en poids, par rapport à la composition de monomères i, de monomères dont les homopolymères ont des valeurs de Tg inférieures à la valeur $Tg^i$ la plus élevée.

18. Dispersion aqueuse de polymères selon l'une quelconque des revendications 1 à 17, pour laquelle aussi bien la composition de monomères 1 que la composition de monomères 2 et qu'un mélange de monomères correspondant à ces derniers ayant éventuellement été pré-émulsionné en milieu aqueux, sont ajoutés de façon continue dans le récipient de polymérisation au cours des étapes de polymérisation 1 et 2, et les monomères présentant au moins un groupement à insaturation éthylénique et au moins un groupe I devant être incorporés en liaison polymère dans les étapes respectives de polymérisation selon l'invention sont ajoutés dans le récipient de polymérisation sous forme mélangée dans le mélange de monomères 1,2 correspondant.

19. Dispersion aqueuse de polymères selon la revendication 18, pour laquelle l'addition continue de monomères est menée de sorte que le taux de conversion de la polymérisation des monomères déjà introduits dans le récipient de polymérisation est ≥ 90% en poids, de préférence ≥ 95% en poids et en particulier ≥ 98% en poids, à chaque instant après le début de la polymérisation.

20. Utilisation d'une dispersion aqueuse de polymères selon l'une quelconque des revendications 1 à 19 en tant qu'agent adhésif, d'enduction et/ou d'imprégnation.

**21.** Formulation aqueuse de colorants contenant une dispersion aqueuse de polymères selon l'une quelconque des revendications 1 à 19 en tant qu'agent liant.

**22.** Préparation pour enduction, imprégnation ou collage contenant une dispersion aqueuse de polymères selon l'une quelconque des revendications 1 à 19.

**23.** Substrat collé, imprégné et/ou enduit avec une préparation aqueuse contenant une dispersion aqueuse de polymères selon l'une quelconque des revendications 1 à 19.

**24.** Procédé de préparation d'une dispersion aqueuse de polymères, caractérisé en ce que

A) on polymérise une composition 1 de composés (monomères) ayant au moins un groupement à insaturation éthylénique, selon le procédé de polymérisation radicalaire en émulsion aqueuse jusqu'à un taux de conversion d'au moins 90% en poids, par rapport à la composition de monomères 1 à polymériser, (étape de polymérisation 1), immédiatement suivie, en présence du produit réactionnel de l'étape de polymérisation 1, de la polymérisation d'une composition 2 de composés (monomères) ayant au moins un groupement à insaturation éthylénique, selon le procédé de polymérisation radicalaire en émulsion aqueuse, (étape de polymérisation 2), étant spécifié que

a) la composition 1 est telle que si l'on copolymérisait cette composition 1 seule de façon statistique, on obtiendrait un polymère 1 dont la température de transition vitreuse convergerait vers la valeur limite $Tg^1$ lorsque la masse moléculaire augmente,
b) la composition 2 est telle que si l'on copolymérisait cette composition 2 seule de façon statistique, on obtiendrait un polymère 2 dont la température de transition vitreuse convergerait vers la valeur limite $Tg^2$ lorsque la masse moléculaire augmente,
c) la différence entre $Tg^1$ et $Tg^2$ s'élève au minimum à 20°C,
d) la quantité de la composition 1 possédant la valeur limite $Tg^1$ la plus basse s'élève à 40-90% en poids, par rapport à la quantité totale des compositions 1 et 2,
e) on incorpore en liaison polymère, en plus des monomères des compositions 1 et 2, au moins un monomère de greffage, différent de ces monomères, ayant au moins un groupement à insaturation éthylénique et au moins un groupement de formule générale I

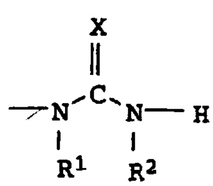

(I),

dans laquelle les variables représentent :

| | |
|---|---|
| X: | O ou S et |
| $R^1$, $R^2$ : | chacun des deux un atome d'hydrogène ou un groupement alkyle en $C_1$-$C_5$, ou bien les deux forment ensemble un groupement pontant alkylène en $C_2$-$C_4$, pouvant être substitué jusqu'à deux fois par un groupement alcoxy en $C_1$-$C_4$ et/ou par un groupement hydroxyle, |

en une quantité de 0,1-30% en poids, par rapport à la quantité totale de monomères à polymériser,

B) on ajoute à la dispersion aqueuse de polymères obtenu en A) au moins un composé chimique B ayant au moins deux groupements aldéhyde non protégés et/ou protégés de façon réversible, étant spécifié que, le rapport molaire V de la totalité des groupements I contenus dans la dispersion aqueuse de polymères A à la quantité molaire totale de groupements aldéhyde, non protégés ou protégés de façon réversible, ajoutés sous forme de composés B, s'élève de 0,1-10 à 1, et
C) on libère la dispersion aqueuse de polymères des hydrazides d'acide carboxylique.